# EUROPEAN PATENT SPECIFICATION

(11) **EP 0 416 121 B1**
(45) Date of publication and mention of the grant of the patent: **04.06.1997**
(21) Application number: 90903957.0
(22) Date of filing: 01.03.1990
(51) Int. Cl.: B41J 2/45, B41J 2/455, G06K 15/12

(54) **PRINTER THAT EFFECTS GRADATION RECORDING**
DRUCKER MIT GRADIERTER AUFZEICHNUNG
IMPRIMANTE AVEC ENREGISTREMENT DES GRADATIONS DES COULEURS

(30) Priority: 03.03.1989 JP 51218/89
(43) Date of publication of application: 13.03.1991
(73) Proprietor: FUJITSU LIMITED, Kawasaki-shi, Kanagawa 211 (JP)
(72) Inventor: SATO, Kazuhiko, Kanagawa 243 (JP); TANAKA, Nobuyuki, Kanagawa 243 (JP); ISHII, Akihiko, Kanagawa 228 (JP); INOUE, Hiroyuki 4-14-17, Chiyogaoka Asao-ku, Kanagawa 215 (JP); AMAYA, Mikio 2-3-2-505, Nijigaoka Tama-ku, Kanagawa 214 (JP)
(74) Representative: Sunderland, James Harry
(86) International application number: JP9000270
(87) International publication number: WO9009890

(56) References cited:
- JP-A- 6 349 463
- JP-A- 6 387 078
- JP-A-63 231 939
- JP-A-63 312 174
- US-A- 4 855 760

## Description

### Field of the Invention

The present invention relates to a printer for gradation recording by the electrophotographic system.

### Background of the Invention

A printer by the electrophotographic system outputs printing patterns through exposure of photosensitive material and developing and fixing processes.

As a printer of the electrophotographic system, an LED printer has been proposed, in which a plurality of LED elements are used for exposing photosensitive material and these are individually driven depending on printing patterns.

In comparison with a laser printer, the LED printer is characterized in that a solid state scanning system is employed and mechanical main scanning is not required; since an optical system can be formed in small in size, the total size of apparatus can also be reduced; and progress in semiconductor technology has realized low cost.

However, a plurality of LED elements result in fluctuation of optical intensity depending on the LED element.

In order to compensate for such fluctuation of optical intensity, as proposed in the Japanese Laid-open Patent No. 58-78476, for example, the light emitting period given to each LED element is changed to equalize the light emitting intensity of each LED element.

Usually, the gradation recording in the LED printer has been conducted by changing the light emitting period of each LED element.

However, as already explained, a plurality of LED elements provide fluctuation of light intensity for each LED element and thereby the recording dot size of each LED element generates fluctuation.

As a result, here rises a problem that certain particular LED element emits higher quantity of light, in spite of smaller gradation data to be recorded than that of the adjacent LED elements, so-called inverse phenomenon of gradation is generated, gradation cannot be expressed accurately and thereby printing quality may be deteriorated.

Therefore, for example, the Japanese Laid-open Patent No. 62-284567 proposes an LED printer which ensures correct concentration gradation by correcting fluctuation of light intensity of LED elements.

However, this LED printer is required to increase the number of light emitting pulses per each recording pixel depending on increase of the number of gradation expressions and accuracy of correction for fluctuation and thereby provides a problem that memory capacity becomes extremely large.

Accordingly, considering such problems of the prior art, it is an object of the present invention to provide an LED printer which realizes expression of accurate gradation without increasing memory capacity.

US-A-4,855,760 discloses an image forming method and apparatus in which current supply periods of time to light emitting diodes constituting a light emitting diode array are controlled corresponding to gradation levels while a constant current is being supplied to the light-emitting diodes, and the current supply period of time is adjusted at every gradation level corresponding to the variations in light intensity of the light emitting diodes when the constant current is supplied to thereby correct for the variations in output light intensities of the light-emitting diodes. The apparatus includes means for holding gradation information relating to the individual light-emitting diodes, means for holding correction information for correction of variations in light intensity characteristics between the individual light-emitting diodes, and driving means for driving the individual light-emitting diodes to emit light for periods of time dependent upon the gradation information and the correction information. With this apparatus, each light-emitting diode is driven ON continuously for a number of periods dependent upon the gradation information for the diode concerned, as adjusted by the correction information for that diode.

### Disclosure of the Invention

According to the present invention there is provided an electrophotographic printer having
a linear arrangement of a plurality of individual recording elements;
means for holding gradation information relating to the individual recording elements of the plurality,
means for holding correction information for correction of variations in light intensity characteristics between the individual recording elements of the plurality, and
driving means for driving the individual recording elements of the plurality to emit light for periods of time dependent upon the gradation information and the correction information,
characterised by
enabling means for providing the driving means with successive enabling signals of different respective durations, the driving means being enabled to drive the individual recording elements to emit light only for enabled periods of the duration of the successive enabling signals, whereby light emissions from the individual recording elements are differently weighted in different enabled periods, in accordance with the durations of those periods;
selection means operable to select, for each individual recording element of the plurality and for each of the successive enabled periods of the driving means, whether the recording element concerned is to be driven to emit light in the enabled period concerned, in dependence upon the gradation information and the correction information.

According to the electrophotographic printer of the present invention, it is possible that less amount of information is used since the weighted light emitting pattern signals are given, thereby less amount of gradation information and fluctuation correcting information to be expressed are required and memory capacity can also be reduced.

### Brief Description of the Drawings

Fig. 1 is a diagram for explaining a structure of an LED printer;
Fig. 2 is a diagram for explaining a structure of LED head;
Fig. 3 is a diagram for explaining a structure of an embodiment;
Fig. 4 is a diagram for explaining control timing signals of an embodiment;
Fig. 5 is a diagram for explaining light quantity correcting ROM;
Fig. 6 is a diagram for explaining the converting operation of LED lighting pattern;
Fig. 7 is a diagram for explaining another embodiment;
Fig. 8 is a diagram for explaining control timing signals of another embodiment; and
Fig. 9 is a diagram for explaining a light quantity correcting ROM in another embodiment.

### Preferred Embodiment of the Invention

The present invention wil be explained in detail with reference to the accompanying drawings.

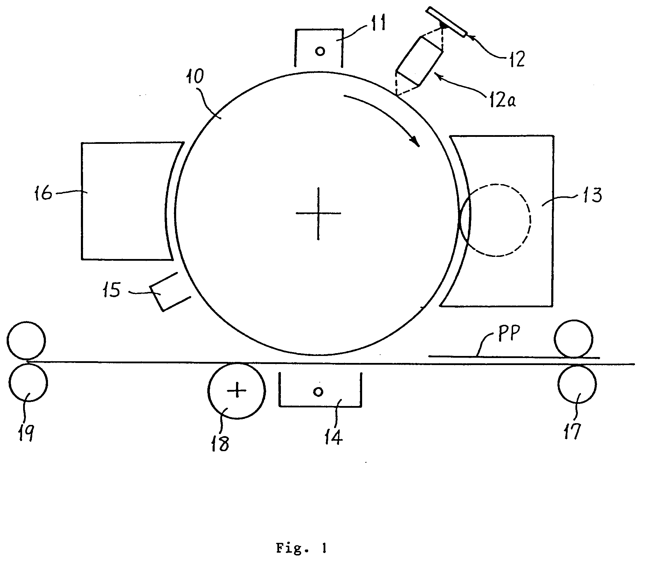

Fig. 1 is a diagram for explaining a structure of LED printer. A photosensitive drum 10, formed as an image carrier for carrying endless type electrostatic latent image, is charged at the surface thereof to uniform potential (for example, -600 V) by a precharger 11 such as a corona discharger and thereby given the photosensitivity.

This photosensitive drum 10 is formed by stacking an organic photoconductive material and a photoconductive material such as amorphous silicon on a conductive drum.

Next, this photosensitive drum 10 is irradiated with the information light emitted from LED head 12 depending on the recording pattern to be printed through rod lens array 12a. Thereby, an electrostatic latent image is formed on the photosensitive drum 10 depending on the information light.

The electrostatic latent image on the photosensitive drum 10 is developed into a toner image by a developing unit 13 utilizing the double-element developing method using a double-element developer consisting of carrier and toner or the single element developing method.

This toner image is then transferred to a cut paper PP which is carried in synchronization with the toner image by a tansfer roller 17 in the transfer unit 14 using a corona discharger.

The cut paper PP having passed the transfer unit 14 is separated from the photosensitive drum 10 by a separating roller 18 and is then sent to a thermal roller fixing unit 19 for fixing the toner image.

On the other hand, the photosensitive drum 10 is discharged by a photodischarger 15 and thereafter residual toner is removed by a cleaner 16 using a cleaning blade. Thereafter, the operations explained above is repeatedly executed.

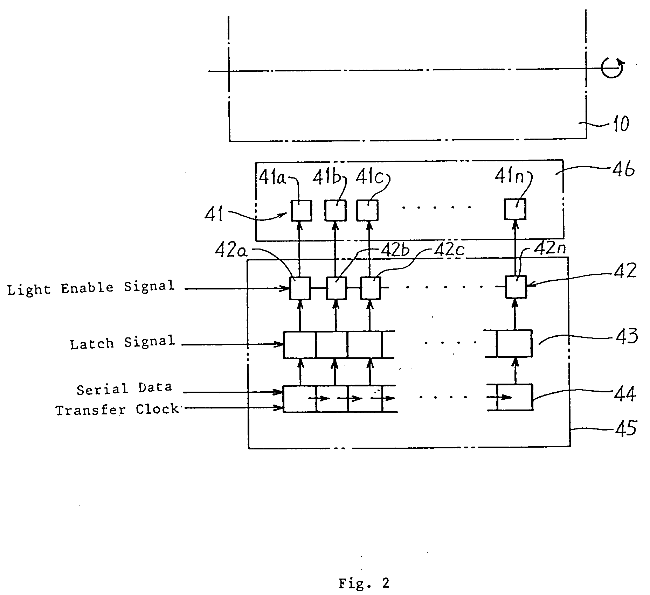

As shown in Fig. 2, the LED head 12 comprises an LED chip array 46 having a plurality of individual LED elements 41a, 41b, .... 41n (for example, n = 4096) arranged in the form of lines (or in zig-zag) along the axial direction of the photosensitive drum 10 and a driver IC 45 for driving each LED element 41 in this LED chip array 46.

The driver IC 45 is structured by driver elements 42a, ....42n formed by tristate buffers provided corresponding to the LED elements 41a, 41b,.....,41n, latch circuits 43a.....43n and a shift register 44 and causes each LED element 41 in the LED chip array 46 to selectively emit the light.

The driver elements 42a,...42n are connected to a common signal line so that the weighted light emitting enable signal generated as described later can be input thereto.

The shift register 44 sequentially shifts the serial data transferred for each input of transfer clock and has the number of stages same as the LED element 41.

The latch circuit 43 inputs the latch signal when n serial data are stored in the shift register 44 and therefore latches a value of shift register 44 in this timing.

Therefore, the driver element 42 sets the supply of power for the LED element 41 to the ON or OFF condition, depending on the value latched by the latch circuit 43, during the period wherein the light emitting enable signal is applied.

The gradation recording utilizing the LED head in such a structure as shown in Fig. 2 will then be explained hereunder.

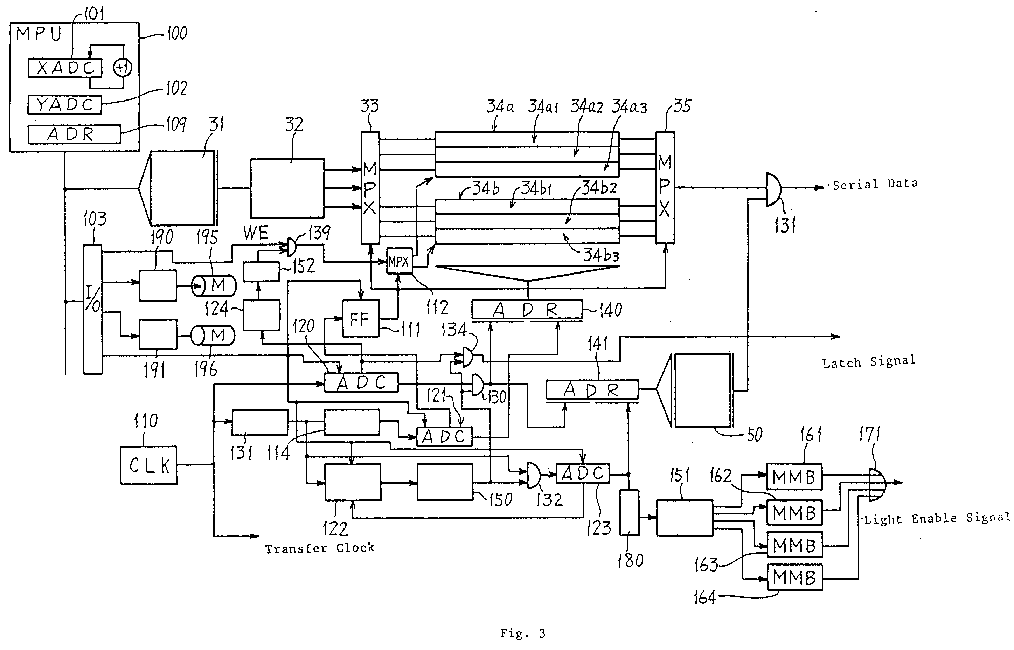

Fig. 3 is a diagram for explaining a structure of an embodiment of the LED printer of the present invention.

In this figure, the numeral 31 designates an image memory to store the 8-bit gradation image data of the single page to be output for printing; 32, a gradation decoder which converts the gradation image data read from the image memory 31 to the 3-bit gradation data; 34a, 34b, line buffers for storing 3-bit gradation data output from the gradation decoder 32; 33, 35, buffer switches which are formed, for example, by a multiplexer. The buffer switch 33 selectively inputs the output of gradation decoder 32 to any one of the line buffers 34a and 34b, while the buffer switch 35 selects an output of line buffer not selected by the buffer switch 33. The numeral 50 defines a ROM for storing the fluctuation correcting data which stores fluctuation correcting data corresponding to each LED element 41.

MPU 100 comprises an X address counter (XADC) 101 provided therein and a Y address counter (YADC) 102 and reads the gradation image data by giving the values of this XADC 101 and YADC 102, namely the dot position address in the X and Y directions to the image memory 31 through the address register 109.

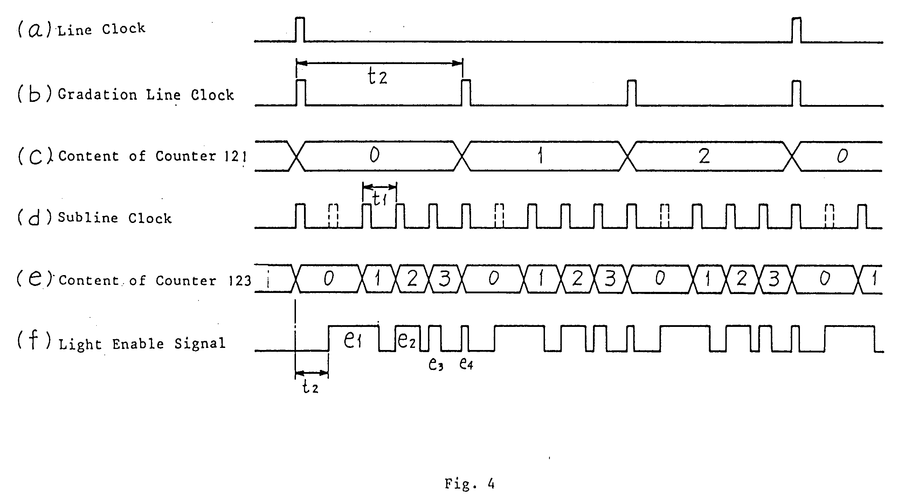

XADC 101 is caused to make increment in synchronization with the oscillation clock of the reference clock oscillator 110, while YADC 102 is counted up when there is a carry signal which is output in the timing that XADC 101 becomes the final address of the storing position of lateral direction of image memory 31 (the axial direction of photosensitive drum 10 corresponding to the main scanning direction), namely 4096 in case 4096 LED elements are used as described above and the line clock (Fig. 4(a)) output by the address counter 121 described later is input through the I/O interface 103.

Moreover, YADC 102 outputs the carry signal when it reaches the final address of storing position of the vertical direction of image memory 31 (circumferencial direction of photosensitive drum 10 corresponding to the subscanning direction), informing that output of image data as many as one page has completed.

MPU 100 stores image data sent from the host computer not illustrated which is already received in this timing and outputs image of the next page.

The image data of each dot position read from the image memory 31 is applied to the buffer switch 33 after it is converted to the gradation data of 3 bits by the gradation decoder 32.

MPU 100 outputs the set signal when it starts the operation through the I/O interface 103 to set the T type flipflop 111 and moreover clears the line buffer 34 and resets each counter.

Thereby, an output of T type flipflop 111 is input to the buffer switches 33 and 35 and multiplexer 112, the buffer switch 33 is switched to input an output of the gradation decoder 32 to the line buffer 34a, while the buffer switch 35 is switched to select an output from the line buffer 34b and the multiplexer 112 is switched to input the write enable signal WE from the I/O interface 103 to the line buffer 34a.

Meanwhile, the address counter 120 counts up the reference clocks sent from the reference clock oscillator 110 and outputs such count value to the upper bit positions of address register 140 through the AND gate circuit 130.

A count value of address counter 121 for counting the clocks frequency-divided by the frequency dividers 113 and 114 from the reference clock of the reference clock oscillator 110 is set to the lower bit positions of the address register 140.

The frequency divider 113 outputs the first frequency divided clock by dividing the frequency of the reference clock to the clock of 1/4096 period, while the frequency divider 114 outputs the second frequency divided clock by dividing the frequency of the first frequency divided clock to the clock of 1/5 period.

The value "4096" of the frequency divider 113 is equal to the number of LED elements 41 in case the reference clock matches the image data reading period from the image memory 31.

The period of first frequency divided clock is set to be equal to the period t₁ of the subline clock indicated in Fig. 4(d), while the period of second frequency divided clock is set to be equal to the gradation line clock t₂ indicated in Fig. 4(b). The line buffer 34 is accessed in accordance with the content being set to the address register 140.

Namely, the address counter 120 counts up in synchronization with the gradation image data output from the image memory 31, giving the dot position address for writing or reading data to the line buffer 34, while the address counter 121 gives the gradation line selection address for selecting gradation lines 34ₐ₁ ∼ 34ₐ₃ in the line buffer 34a and gradation lines 34_{b1} ∼ 34_{b3} in the line buffer 34b.

Accordingly, the gradation data is stored in the predetermined position of line buffer 34a in accordance with the address to be set in the address register 140 and the gradation data of the predetermined position of the line buffer 34b is output through the buffer switch 35.

The counter 122 counts up the first frequency divided clock of the frequency divider 113 and outputs such count value.

The decoder 150 decodes an output value of the counter 122. Namely, it outputs "0" when an output of counter 122 is "1" or "1" when the output of counter 122 is not "1".

Accordingly, since an output of decoder 150 and the first frequency divided clock from the frequency divider 113 are input, the AND gate 132 outputs the subline clock of the type in which the second clock (indicated by a broken line) is eliminated as shown in Fig. 4(d).

Here, the second clock is extracted because it is requested that the duty ratio of the light emitting enable signal must be large.

Moreover, the AND gates 130 and 134 do not output the count output of address counter 120 and carry signal when an output of decoder 150 is "0", namely during the periods of second (indicated by the broken line) and third clocks of Fig. 4(d).

The address counter 123 counts up the subline clock output from the AND gate circuit 132 and outputs such count value. An output of address counter 123 is input to the lower bit position of the address register 141.

Meanwhile, since an output of address counter 120 is set to the upper bit positions of address register 141, an access is extended to the fluctuation compensating ROM 50 in accordance with content of the address register 141.

Namely, the fluctuation compensating ROM 50 outputs a value in accordance with the fluctuation charcteristic of light intensity of the LED element 41 in the dot position address in synchronization with an output of the gradation data corresponding to the dot position address from the line buffer 34b.

An output of this fluctuation compensating ROM 50 and an output of the line buffer 34b are applied to the shift register 44 in the LED head as the serial data through the AND gate circuit 131.

An output of the address counter 123 is input to the decoder 151 through a delay circuit 180 which delays the subline clock indicated in Fig. 4(d) for the period of t₁.

As shown in Fig. 4(e), the decoder 151 selects the monomultivibrator (MMB) 161 when an output of the address counter 123 is "0", or MMB 162 when an output is "1", or MMB 163 when an output is "2", or MMB 164 when an output is "3".

MMB 161 outputs the light emitting enable signal of the light emitting period e₁, while MMB 162 outputs the light emitting enable signal of the light emitting period e₂, MMB 163 outputs the light emitting enable signal of the light emitting period e₃ and MMB 164 outputs the light emitting enable signal of the light emitting period e₄.

Therefore, since the address counter 123 repeats the countup operation of count value from "0" every time when the address counter 121 counts up and outputs the gradation line clock, the light emitting enable signal indicated by Fig. 4(f) is input to a driver element 42 of LED head through the OR circuit 171.

Moreover, the light emitting period e₁ has the light emitting time of eight unit time, while the light emitting period e₂ the emitting time of four unit time, the light emitting period e₃ the emitting time of two unit time and the light emitting period e₄ the emitting time of one unit time. Combination of such unit times provides the light emitting time of 0∼15 unit times.

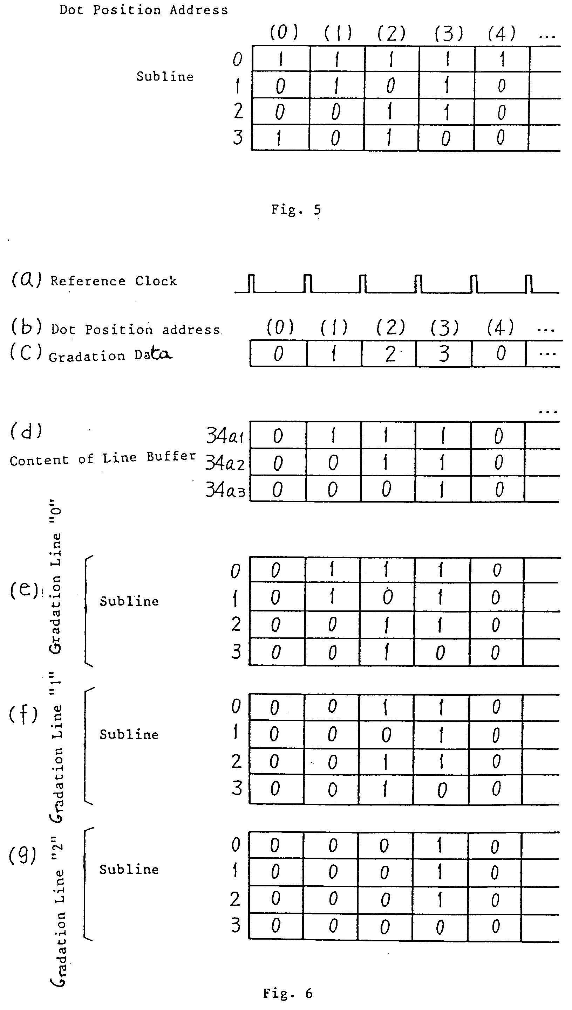

Fig. 5 indicates content of the light quantity compensating ROM 50. As shown in Fig. 5, the light quantity compensating data is stored in the form of 4 bits for every LED element 41 to select the subline for light emitting. As explained previously, for the subline 0, the light emitting time of eight unit times is set, for the subline 1, the light emitting time of four unit times, for the subline 2, the light emitting time of two unit times and for the subline 3, the light emitting time of one unit time is set, respectively.

For instance, the LED element providing the dot position address 0 executes light emission in the subline 0 and subline 3 and continues light emission during nine unit times in total. The LED element providing the dot position address 1 executes light emission in the subline 0 and subline 1 and continues light emission during 12 unit times in total.

Since light intensity of LED element is generally scattered in the constant range, it is desirable that the light emitting time of LED element having an average light intensity is previously set and the light emitting time of the other LED elements is set around such light emitting time.

In this embodiment, the light emitting time of the LED element having an average light intensity is set to the 12 unit times and light quantity compensation is carried out within the range of the 8∼15 unit times.

It is a matter of course that finer light quantity compensation is possible by setting the larger unit times to be selected through increase of the number of sublines.

When a voltage is constant, the LED element increases light quantity accurately in proportional to the duration of pulse applied. Accordingly, it is no longer necessary to provide the light quantity value in every gradation level for each LED element of the light quantity compensating ROM 50 and it is enough that a common compensating value for each gradation level is stored in the memory.

Operations of this embodiment will be explained with reference to Fig. 2 and Fig. 6.

MPU 100 resets each counter through the I/O interface 103 and outputs the write enable signal WE to the multiplexer 112. It moreover applies the addresses indicated by XADC 101 and YADC 102 to the image memory 31 synchronously with the clock of reference clock generator 110 and inputs the gradation image data read from the image memory 31 to the gradation decoder 32.

The gradation image data is read synchronously with the reference clock from the reference clock oscillator 110 shown in Fig. 6(a) and the gradation image data "0", "1", "2",.... are read for each dot position address (0), (1), .... as shown in Fig. 6(b). This gradation data is converted to the gradation data of 3 bits by the gradation decoder 32 and is then stored in the line buffer as indicated in Fig. 6(c). Namely, in the gradation data with gradation level "0", three bits are all "0" and gradation data of gradation level "1" is converted to "100", the gradation data with gradation level "2" is converted to "110". The gradation data with gradation level "3" is converted to the light pattern "111" in which three bits are all "1".

The lighting pattern of gradation line does not allow lighting of the LED element for the gradation level 0, causes the LED element to light during the period of gradation line 0 for gradation level 1, causes the LED element to light during the gradation 0 and 1 for gradation level 2 and causes the LED element to light during the gradation line 0, 1 and 2 for gradation level 3.

Namely, when the gradation level is "0", the level "0" is stored to the line buffers 34ₐ₁∼34ₐ₃ (or 34_{b1}∼34_{b3}) as shown in Fig. 6(d). Moreover, when the gradation level is "1", the level "1" is stored only to the line buffer 34ₐ₁ (or 34_{b1}) and the level "0" to the other line buffers.

Moreover, when the gradation level is "2", only the line buffers 34ₐ₁ and 34ₐ₂ (or 34_{b1} and 34_{b2}) are set to "1" and the remaining line buffers 34ₐ₃ (or 34_{b3}) is set to "0". When the gradation level is "3", the line buffers 34ₐ₁∼34ₐ₃ (or 34_{b1}∼34_{b3}) are all set to "1".

Since the address counter 120 counts up synchronously with an output of the reference clock oscillator 110, the dot position address is set to the address register 140 and a count value of the address counter 121 is "0" in this case, the first bit among the gradation data of three bits output from the gradation decoder 32 is stored in the line buffer 34ₐ₁. The other bits are sequentially stored in the storing position in the line buffer 34ₐ₁ corresponding to the dot position address indicated by the count value of address counter 120.

Moreover, the other line buffer 34_{b1} is selected by the switch 35 and the data of the corresponding position is output to the one input terminal of the AND gate circuit 131.

Namely, as shown in Fig. 6(d), when the lighting pattern is assumed to be stored in the line buffer 34b, since the stored content of dot position address (0) is "0", "0" is output.

Here, since a value of counter 122 is "0" and the address counter 123 outputs "0" as the subline address, the fluctuation compensating ROM 50 reads the data "1" stored in the storing position of the dot position address "0" with the subline address "0" and then applies such data to the other input of the AND gate circuit 131. However, since the other input of the AND gate circuit 131 is "0", "0" is output as indicated in Fig. 6(e).

Each time when the address counter 120 counts up, the dot position address of line buffer 34 and dot position address of flucturation compensating ROM 50 are renewed and thereby data write and read operations are carried out sequentially.

Since the reference clock is input from the reference clock oscillator 110 to the shift register 44 of LED head, an output of the AND gate circuit 131 is sequentially shifted and stored in the shift register 44.

When the address counter 120 counts up 4096, the carry signal is output to the LED head as the latch signal. Therefore, the content set in the shift register 44 is then set to the latch circuit 43.

Moreover, the carry signal of address counter 120 is input to the counter 124.

An output of counter 124 is input to the decoder 152, which outputs "1" when the count value is "0" or outputs "0" when count value is "1"∼"4". Accordingly, the AND gate circut 139 outputs the write enable signal only when the first subline clock shown in Fig. 4(b) is output. The address counter 120 starts again the countup operation of reference clock generated by the reference clock oscillator 110.

In this case, since an output of counter 122 becomes "1", an output of decoder 150 becomes "0" and an output of the address counter 120 is gated by the AND gate circuit 130, the read operation for the line buffer 34ₐ₁ and fluctuation compensating ROM 50 is not carried out.

In this timing, the first subline clock (Fig. 4(d)) is input to the decoder 151 through the delay circuit 180. Accordingly, the decoder 151 causes MMB 161 to carry out the selecting operation and applies the light emitting enable signal of light emitting period e₁ with eight unit times to the driver element 42.

Thereby, only the LED element for which "1" is set to the latch circuit 43, namely the LED element 41 having the gradation data other than "0" is driven.

When the address counter 120 counts up to "4096" as the count value and the address counter starts again the countup operation of reference clock sent from the reference clock oscillator 110, an output of counter 122 becomes "2" but since content of address counter 121 is still "0", the read operation from the line buffer 34_{b1} and fluctuation compensating ROM 50 are carried out again.

In this timing, an output of counter becomes "2" and the decoder 150 outputs "1". Therefore, since the address counter 123 counts up and becomes "1", the dot position address and subline address "1" are set to the address register 141.

Accordingly, content of subline address "1" is read from the fluctuation compensating ROM 50 is read and it is then applied to the AND gate circuit 131. Thereby, it is calculated logically with the data read from the line buffer 34_{b1} as explained above and then input to the shift register 44 of LED head.

In this timing, since the write enable signal WE is gated by the AND gate circuit 139, the write operation is not carried out to the line buffer 34ₐ₁.

When the address counter 120 counts up and the carry signal is output, content of shift register 44 is set to the latch circuit 43 as explained above. Meanwhile, the decoder 151 inputs the count value "1" of the address counter 123 and therefore it selects MMB 162 and drives the LED element 41 by applying the light emitting enable signal of the light emitting period e₂ with the four unit times to the driver element 42.

As explained above, the operations explained previously is repeated and executed sequentially in order to execute the processing for the gradation line "0".

When the address counter 123 counts up, the carry signal is output to the counter 122 and it starts the countup operation again from "0".

In this case, the gradation line clock as the second frequency divided clock is input to the address counter 121 from the frequency divider 114. It is then counted up and the count value "1" is set to the address register 140.

Accordingly, since the line buffers 34ₐ₂ and 34_{b2} are selected and the counter 134 counts up, an output of decoder 152 becomes "1". Moreover, MPU 100 causes again YADC 101 to make the countup operation under the condition that countup operation of YADC 102 stops, when an output of frequency divider 114 is provided.

Thereby, operation for the next gradation line "1" is executed by repeatedly executing the processings as explained previously to the line buffers 34ₐ₂ and 34_{b2}.

Namely, as shown in Fig. 6(f), the signal of gradation line 1 is applied to cause the LED element 41 at the dot position addresses "2", "3", etc. of the gradation data of "2" or more to execute the light emitting operation. Next, the signal pattern of graline "2" is applied, as shown in Fig. 6(g), to the LED element 41 at the dot position address "3" with the gradation of "3" to execute the light emitting operation by repeatedly executing the operations mentioned above.

When operations for each gradation line are completed, the address counter 121 counts up and the carry signal (line clock in Fig. 4(a)) is input to the T type flipflop 111. Therefore, the T type flipflop 111 inverts its output.

Accordingly, the buffer switch 33 inputs an output of gradation decoder 32 to the line buffer 34b, while the buffer switch 35 selects an output of the line buffer 34a and the multiplexer 112 is switched to apply the write enable signal to the line buffer 34b.

When this line clock (Fig. 4(a)) is output, YADC 102 of MPU 100 counts up and sets the read address to the image memory 31 to read the gradation image data of the next line.

MPU 100 operates the drivers 190 and 191 through the I/O interface 103 for each output of the first frequency divided clock, namely synchronous with the output timing of clock output from the frequency divider 113 or the timing of the counter 122 for the countup operation and rotatably drives a stepping motor 195 for driving the photosensitive drum 10 and a stepping motor 196 for driving the sheet transfer rollers 32 and 33 for the one subline in the subscanning direction.

By sequential repetition of the operations explained above, the gradation recording can be realized under the condition that the fluctuation is compensated.

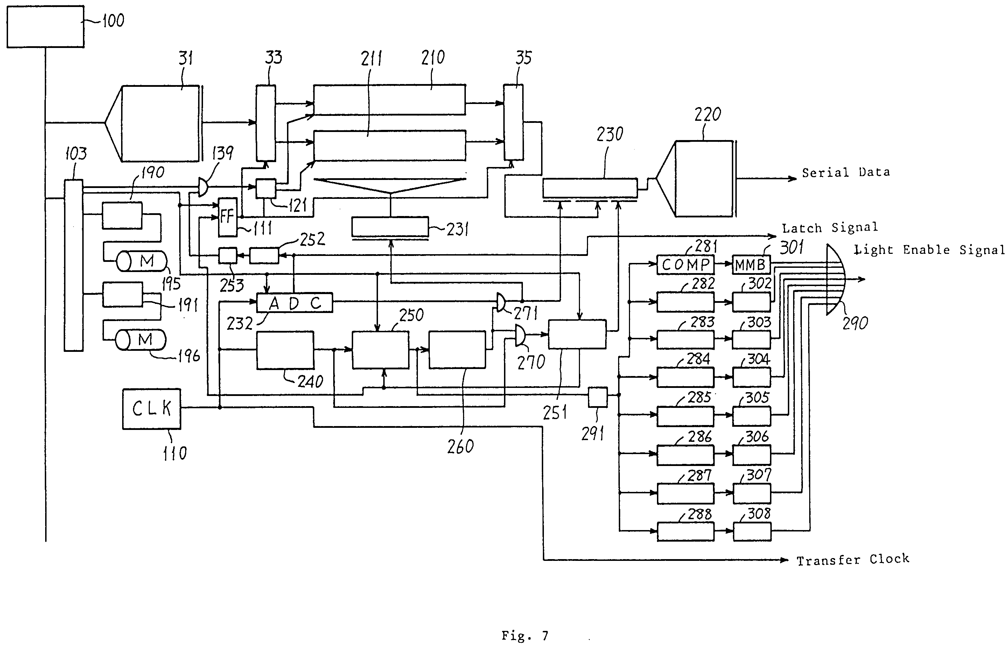

Fig. 7 is a diagram for explaining a structure of the other embodiment of the LED printer of the present invention.

The elements like those in Fig. 3 are designates by the like numerals and explanation is not repeated.

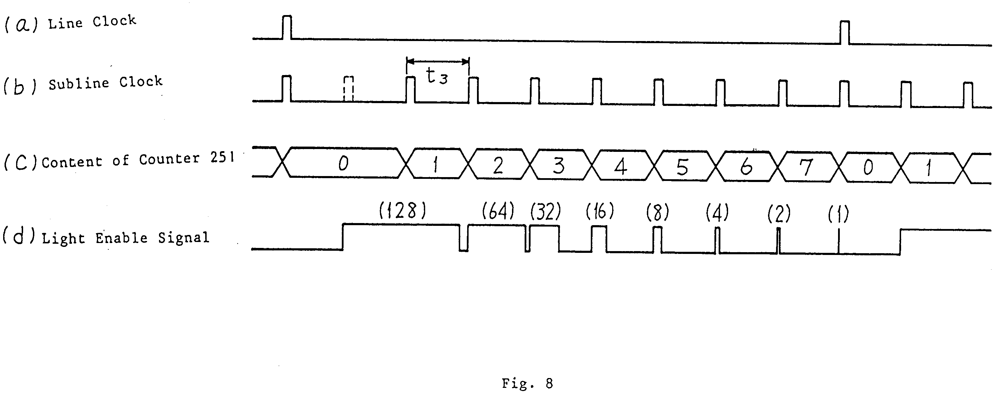

In Fig. 7, numerals 210 and 211 designate line buffers storing gradation image data read from the image memory 31; 220, a light quantity compensating ROM storing the light quantity compensating data of each LED element 41 for every gradation level; 230, an address register setting addresses for making access to the light quantity compensating ROM 220; 231, an address register setting addresses for making access to the line buffers 210, 211; 232, an address counter for counting the reference clock generated by the reference clock oscillator 110; 240, a frequency divider for dividing the reference clock from the reference clock oscillator 110 to the period of 1/4096 and outputting a third frequency divided clock (the clock in the same period as the period t₃ of the subline clock shown in Fig. 8(b)); 250, a counter for counting the third frequency divided clock; 260, a decoder outputting "0" only when the count value of counter 250 is "1", namely when the second clock (indicated by the broken line) of Fig. 8(b) is output; 270, 271, AND gates for inputting an output of the decoder 260 to the one terminal; 251, a counter for counting an output signal of the AND gate circuit 270; 281 288, comparators respectively inputting an output of counter 250. The comparator 281 drives the monomultivibrator (MMB) 301 which outputs the light emitting enable signal of 128 unit times when a count value of counter 250 is 0; the comparator 282 drives MMB 302 which outputs the light emitting enable signal of 64 unit times when a count value of the counter 250 is 2; the comparator 283 drives MMB 303 which outputs the light emitting enable signal of 32 unit times when a count value of counter 250 is 3; the comparator 284 drives MMB 304 which outputs the light emitting enable signal of 16 unit times when a count value of counter 250 is 4; the comparator 285 drives MMB 305 which outputs the light emitting enable signal of 8 unit times when a count value of counter 250 is 5; the comparator 286 drives MMB 306 which outputs the light emitting enable signal of 4 unit times when a count value of counter 250 is 6; the comparator 287 drives MMB 307 which outputs the light emitting enable signal of 2 unit times when a count value of counter 250 is 7; the comparator 288 drives MMB 308 which outputs the light emitting enable signal of 1 unit time when a count value of counter 250 is 8; 290, OR circuit for outputting the OR output of MMBs 301∼308 as the light emitting enable signal of LED head; 252, a counter for counting the carry signal from the address counter 232; 253, a decoder outputting "1" when the count value is "0" or "0" when the count value is "1"∼"7".

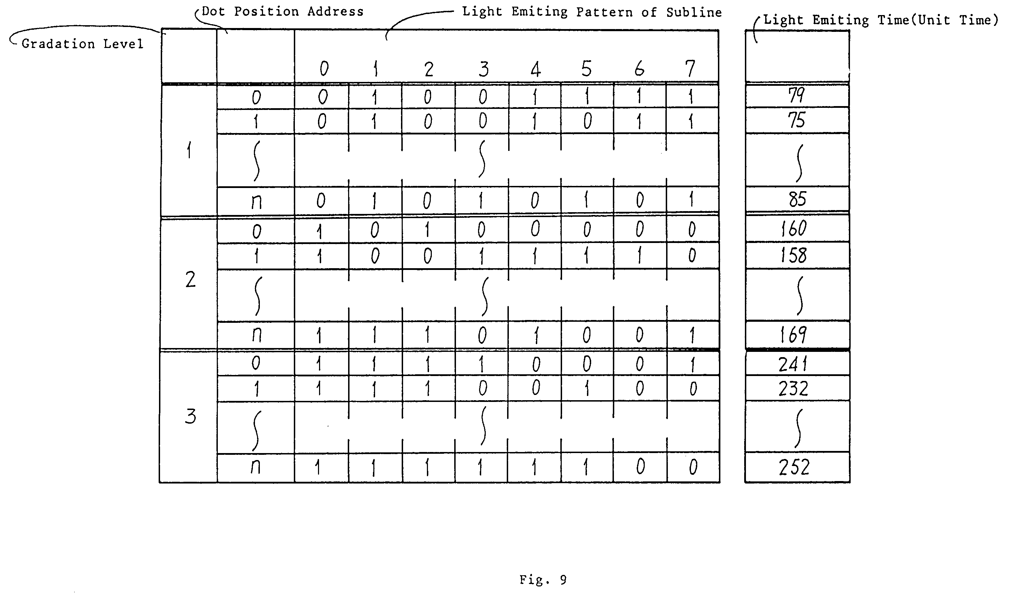

Fig. 9 is a diagram for indicating content of light quantity compensating ROM in the conversion table. The light quantity compensating ROM 220 stores the lighting pattern of subline of each LED element for each gradation level.

The light emitting time is set in accordance with light intensity of LED element based on the light quantity compensating data, for example, 80 unit times for gradation level 1, 160 unit times for gradation level 2 and 240 unit times for gradation level 3.

In the structure explained above, MPU 10 reads the gradation image data from the image memory 31 as in the case of the embodiment of Fig. 3.

In this case, MPU 100 sets the T type flipflop 111 so that the buffer switch 33 selects the buffer memory 210 and therefore the gradation image data is stored in the buffer memory 210.

On the other hand, the address counter 232 counts up synchronously with the read operation of gradation image data from the image memory 31. Therefore, the write/read address of the line buffers 210, 211 are set to the address register 231 for each gradation image data.

Accordingly, the gradation image data from the image memory 31 is sequentially stored in the dot position address 0 of the line buffer 210. Moreover, the gradation image data is sequentially read from the dot position address 0 of the line buffer 211. The gradation image data read out is set to the intermediate bit position of address register 230 through the buffer switch 35.

Since a count value of address counter 232 is set to the upper bit position of address register 230, while an output (count value "0" in this timing) of counter 251 is set to the lower bit position of the address register 230, as will be apparent from Fig. 9, the dat "0" stored in the storing position where the dot position address is 0 (corresponding to the LED element 41a) and subline is "0" is read from the light quantity compensating ROM 220 with the gradation level (for example, "1") indicated by the gradation image data and is then output to the shift register 44 of LED head.

The dot position address set to the address register 231 and address register 230 are sequentially renewed for each count up of the address counter 232 and the data for each LED element 41 is read.

Namely, in case gradation level indicated by the gradation image data corresponding to the dot position address 1 is "2", as will be apparent from Fig. 9, the data "1" stored in the storing position of corresponding to subline "0" is read from the light quantity compensating ROM 220 and is then output to the shift register 44.

When the address counter 232 counts up to 4096, the carry signal is applied to the latch circuit 43 as the latch signal, it is then sequentially shifted to the shift register 44 and the data being set is set to the latch circuit 43.

In this timing, a count value of counter 240 is input to the comparators 281∼288 through the delay circuit 291. Here, since a count value of counter 250 is "1", only the comparator 281 obtains a comparison output, and only MMB 301 is selectively driven and outputs the light emitting enable signal of 128 unit times.

The address counter 232 outputs the carry signal, a count value of counter 250 becomes "1", an output of decoder 260 becomes "0" and is input to the AND gate circuits 270 and 271. Therefore, outputs of address counter 232 and frequency divider 240 are not input to the address registers 231, 230 and counter 251, the access for the line buffers 210, 211 and light quantity compensating ROM 220 is not carried out and the countup operation of counter 251 is not carried out.

Moreover, the comparators 281∼288 do not obtain the comparison output, MMBs 302∼308 do not operate and MMB 301 continues output operation of the light emitting enable signal of 128 unit times.

Since the count value of counter 250 becomes "2" when the the address counter 232 outputs the next carry signal, an output of decoder 260 returns to "1", outputs of the address counter 232 and frequency divider 240 are input to the address registers 230, 231 and counter 251, access is made to the line buffers 210, 211 and light quantity compensating ROM 220 as explained previously, and the countup operation of counter 251 is also carried out.

As described above, the gradation recording of the one line is conducted by reading the data sequentially from the light quantity compensating ROM 220 and then setting it to the shift register 44.

When the counter 251 counts up the value "7" and outputs the carry signal, the counter 240 is reset and is then input to the T type flipflop 111, switching the buffer switches 33, 35 and multiplexer 112.

MPU 100 causes XADC 101 and YADC 102 to count up and set the count value to the address register in order to read the gradation image data of the next line and also causes the line buffer 211 to store the gradation image data of the next line through the buffer switch 33 by reading it from the image memory 31.

With continuation of operations explained above, the gradation recording operation of the next line can be carried out and the gradation recording operation of a single page can be executed.

As explained above, in this embodiment, the gradation line clock is not provided unlike the first embodiment and light quantity compensation and gradation recording of each LED can be done through combination of the lighting sublines.

In above embodiments, the LED elements have been used as the individual light emitting elements but the present invention is not limited thereto. Namely, the other individual light emitting element can be used and a liquid crystal shutter element in which a plurality of common light sources are arranged like a line may be used.

Moreover, the present invention can also be applied to the optical system for exposure of the electgrophotographic printer which realizes color recording.

In addition, in each embodiment explained above, the monomultivibrator has been used for outputting the light emitting enable signal of the difference duration, but the present invention is not limited thereto.

For instance, since the duration for making access to the memory by MPU is already known, the periodical memory access is conducted by MPU. The number of accesses to memory which is different for each subline clock is synchronized with the subline clock for the countup operation, and the light emitting enable signal is output during the period until the count value reaches the predetermined value.

### Applicability in Industry

According to the present invention, since fluctuation of light intensity of individual light emitting element is compensated using the weighted pattern on the occasion of conducting gradation recording using individual light emitting elements, high quality gradation recording can be realized with less memory capacity.

## Claims

1. An electrophotographic printer having
a linear arrangement of a plurality of individual recording elements (41a to 41n);
means (34a, 34b; 210, 211, 220) for holding gradation information relating to the individual recording elements (41a to 41n) of the plurality,
means (50; 220) for holding correction information for correction of variations in light intensity characteristics between the individual recording elements (41a to 41n) of the plurality, and
driving means (42a to 42n) for driving the individual recording elements (41a to 41n) of the plurality to emit light for periods of time dependent upon the gradation information and the correction information,
characterised by
enabling means (161, 162, 163, 164, 171; 301 to 308, 291) for providing the driving means (42a to 42n) with successive enabling signals of different respective durations (e₁, e₂, e₃, e₄; (128), (64), (32), (16), (8), (4), (2), (1)), the driving means being enabled to drive the individual recording elements (41a to 41n) to emit light only for enabled periods of the duration of the successive enabling signals, whereby light emissions from the individual recording elements are differently weighted in different enabled periods, in accordance with the durations of those periods;
selection means (43, 44) operable to select, for each individual recording element (41a to 41n) of the plurality and for each of the successive enabled periods of the driving means (42a to 42n), whether the recording element concerned is to be driven to emit light in the enabled period concerned, in dependence upon the gradation information and the correction information.

2. A printer as claimed in claim 1,
characterised in that
the selection means comprises
a shift register (44) having storage stages equal in number to the recording elements (41a to 41n) of the plurality,
latch circuits (43) corresponding respectively to the storage stages of the shift register (44) and for storing the values stored in those storage stages in response to the application of a latch signal to the latch circuits,
and the driving means (42) comprises
driver elements (42a to 42n) respectively connected to outputs of respective latch circuits (43), operable to selectively drive respective recording elements (41a to 41n) in accordance with the values stored in the respective latch circuits (43),
whereby
(a) the storage stages of the shift register (44) are loaded with selection data indicating whether the respective recording elements (41a to 41n) corresponding to the stages are to be driven to emit light in a next enabled period of the driving means (42),
(b) a latch signal is applied to the latch circuits (43) for storing the selection data into the latch circuits, and
(c) the enabling signal (e₁, e₂, e₃, e₄; (128), (64), (32), (16), (8), (4), (2), (1)) for this next enabled period is applied to the driving means (42),
and (a) to (c) are repeated for each successive enabled period of the driving means (42).

3. A printer as claimed in claim 1 or 2,
characterised in that
the enabling signals, and hence the enabled periods, have respective durations (e₁, e₂, e₃, e₄; (128), (64), (32), (16), (8), (4), (2), (1)) which are different multiples of a unit or smallest duration, the multiples being for example the powers of two, whereby light emissions from the individual recording elements in different enabled periods are weighted in accordance with those multiples.

4. A printer as claimed in claim 3,
characterised in that
the means (50; 220) for holding correction information hold that information in a form indicating which weights of light emission are required for correction.

5. A printer as claimed in claim 4,
characterised in that
the means (210, 211, 220) for holding gradation information hold that information in a form indicating which weights of light emission are required for gradation.

6. A printer as claimed in any preceding claim.
characterised in that
the individual recording elements (41a to 41n) of the plurality are LED elements.

## Patentansprüche

1. Elektrophotographischer Drucker, mit
einer Linearanordnung einer Mehrzahl von einzelnen Aufzeichnungselementen (41a bis 41n),
Einrichtungen (34a, 34b; 210, 211, 220) zum Halten von Gradationsinformationen betreffend die einzelnen Aufzeichnungselemente (41a bis 41n) der Mehrzahl,
Einrichtungen (50; 220) zum Halten von Korrekturinformationen zur Korrektur von Variationen in den Lichtintensitätscharakteristika zwischen den einzelnen Aufzeichnungselementen (41a bis 41n) der Mehrzahl, und
Steuereinrichtungen (42a bis 42n) zum Steuern der einzelnen Aufzeichnungselemente (41a bis 41n) der Mehrzahl, um Licht für Zeitperioden in Abhängigkeit von den Gradationsinformationen und den Korrekturinformationen zu emittieren,
gekennzeichnet durch
Freigabeeinrichtungen (161, 162, 162, 164, 171; 301 bis 308, 291), um den Steuereinrichtungen (42a bis 42n) aufeinanderfolgende Freigabesignale unterschiedlicher jeweiliger Dauern (e₁, e₂, e₃, e₄; (128), (64), (32), (16), (8), (4), (2), (1)) bereitzustellen, welche Steuereinrichtungen freigegeben werden, um die einzelnen Aufzeichnungselemente (41a bis 41n) zu steuern, um Licht nur für freigegebene Perioden der Dauer der aufeinanderfolgenden Freigabesignale zu emittieren, wodurch Lichtemissionen von den einzelnen Aufzeichnungselementen in verschiedenen Freigabeperioden gemäß den Dauern jener Perioden unterschiedlich gewichtet werden,
Auswahleinrichtungen (43, 44), die betreibbar sind, um für jedes einzelne Aufzeichnungselement (41a bis 41n) der Mehrzahl und für jede der aufeinanderfolgenden Freigabeperioden der Steuereinrichtungen (42a bis 42n) auszuwählen, ob das betreffende Aufzeichnungselement gesteuert werden soll, um in der betreffenden Freigabeperiode in Abhängigkeit von den Gradationsinformationen und den Korrekturinformationen Licht zu emittieren.

2. Drucker nach Anspruch 1,
dadurch gekennzeichnet, daß
die Auswahleinrichtungen enthalten,
ein Schieberegister (44) das Speicherstufen in der gleichen Anzahl wie die Aufzeichnungselemente (41a bis 41n) der Mehrzahl hat, Halteschaltungen (43) entsprechend jeweils den Speicherstufen des Schieberegisters (44) und zum Speichern der Werte, die in jenen Speicherstufen gespeichert sind, in Abhängigkeit vom Anlegen eines Haltesignals an die Halteschaltungen,
und die Steuereinrichtungen (42) enthalten,
Steuerelemente (42a bis 42n), die jeweils mit Ausgängen jeweiliger Halteschaltungen (43) verbunden sind, betreibbar zum selektiven Steuern jeweiliger Aufzeichnungselemente (41a bis 41n) gemäß den Werten, die in den jeweiligen Halteschaltungen (43) gespeichert sind,
wodurch
(a) die Speicherstufen des Schieberegisters (44) mit Auswahldaten geladen werden, die angeben, ob jeweilige Aufzeichnungselemente (41a bis 41n), die den Stufen entsprechen, zu steuern sind, um in einer nächsten Freigabeperiode der Steuereinrichtungen (42) Licht zu emittieren,
(b) ein Haltesignal an die Halteschaltungen (43) angelegt wird, um die Auswahldaten in die Halteschaltungen zu speichern, und
(c) das Freigabesignal (e₁, e₂, e₃, e₄; (128), (64), (32), (16), (8), (4), (2), (1)) für diese nächste Freigabeperiode an die Steuereinrichtungen (42) angelegt wird,
und (a) bis (c) für jede nachfolgende Freigabeperiode der Steuereinrichtungen (42) wiederholt werden.

3. Drucker nach Anspruch 1 oder 2,
dadurch gekennzeichnet,
daß die Freigabesignale, und somit die Freigabeperioden, jeweilige Dauern (e₁, e₂, e₃, e₄; (128), (64), (32), (16), (8), (4), (2), (1)) haben, die verschiedene Vielfache einer Einheits- oder einer kleinsten Dauer sind, welche Vielfachen zum Beispiel die Potenzen von zwei sind, wodurch Lichtemissionen von den einzelnen Aufzeichnungselementen in verschiedenen Freigabeperioden gemäß diesen Vielfachen gewichtet sind.

4. Drucker nach Anspruch 3,
dadurch gekennzeichnet,
daß die Einrichtungen (50; 220) zum Halten von Korrekturinformationen jene Informationen in einer Form halten, die angibt, welche Lichtemissionsgewichtungen zur Korrektur erforderlich sind.

5. Drucker nach Anspruch 4,
dadurch gekennzeichnet,
daß die Einrichtungen (210, 211, 220) zum Halten von Gradationsinformationen jene Informationen in einer Form halten, die angibt, welche Lichtemissionsgewichtungen für die Gradation erforderlich sind.

6. Drucker nach einem der vorhergehenden Ansprüche,
dadurch gekennzeichnet,
daß die einzelnen Aufzeichnungselemente (41a bis 41n) der Mehrzahl LED-Elemente sind.

## Revendications

1. Imprimante électrophotographique comportant :
un agencement linéaire d'une pluralité d'éléments d'enregistrement individuels (41a à 41n) ;
des moyens (34a, 34b ; 210, 211, 220) pour garder les informations de gradation des couleurs concernant les éléments d'enregistrement individuels (41a à 41n) de la pluralité,
des moyens (50 ; 220) pour garder les informations de correction pour la correction des variations des caractéristiques d'intensité lumineuse entre les éléments d'enregistrement individuels (41a à 41n) de la pluralité, et
des moyens de commande (42a à 42n) pour commander les éléments d'enregistrement individuels (41a à 41n) de la pluralité pour émettre de la lumière pendant des périodes de temps dépendant des informations de gradation des couleurs et des informations de correction, caractérisée par
des moyens de validation (161, 162, 163, 164, 171 ; 301 à 308, 291) pour fournir aux moyens de commande (42a à 42n) des signaux de validation successifs de durées respectives différentes (e₁, e₂, e₃, e₄ ; (128), (64), (32), (16), (8), (4), (2), (1)), les moyens de commande étant autorisés à commander les éléments d'enregistrement individuels (41a à 41n) pour émettre de la lumière seulement pendant des périodes autorisées de la durée des signaux de validation successifs, de telle manière que les émissions de lumière provenant des éléments d'enregistrement individuels soient pondérées différemment dans des périodes autorisées différentes, selon les durées de ces périodes ;
des moyens de sélection (43, 44) susceptibles d'être commandés pour choisir, pour chaque élément d'enregistrement individuel (41a à 41n) de la pluralité et pour chacune des périodes autorisées successives des moyens de commande (42a à 42n), si l'élément d'enregistrement concerné doit être commandé pour émettre de la lumière dans la période autorisée concernée, en fonction des informations de gradation des couleurs et des informations de correction.

2. Imprimante selon la revendication 1,
caractérisée en ce que :
les moyens de sélection comprennent :
un registre à décalage (44) comportant des étages de stockage égaux en nombre aux éléments d'enregistrement (41a à 41n) de la pluralité,
des circuits de verrouillage (43) correspondant respectivement aux étages de stockage du registre à décalage (44) et pour stocker les valeurs stockées dans ces étages de stockage en réponse à l'application d'un signal de verrouillage aux circuits de verrouillage,
et les moyens de commande (42) comprennent :
des éléments de commande (42a à 42n) reliés, respectivement, aux sorties des circuits de verrouillage respectifs (43), susceptibles de fonctionner pour commander, de manière sélective, des éléments d'enregistrement respectifs (41a à 41n) selon les valeurs stockées dans les circuits de verrouillage respectifs (43), de telle manière que
(a) les étages de stockage du registre à décalage (44) soient chargés avec les données de sélection indiquant si les éléments d'enregistrement respectifs (41a à 41n) correspondant aux étages doivent être commandés pour émettre de la lumière dans une période autorisée suivante des moyens de commande (42),
(b) un signal de verrouillage soit appliqué aux circuits de verrouillage (43) pour stocker les données de sélection dans les circuits de verrouillage, et
(c) le signal de validation (e₁, e₂, e₃, e₄ ; (128), (64), (32), (16), (8), (4), (2), (1)) pendant cette période autorisée suivante soit appliqué aux moyens de commande (42),
et (a) à (c) soient répétés pendant chaque période autorisée successive des moyens de commande (42).

3. Imprimante selon la revendication 1 ou 2, caractérisée en ce que les signaux de validation et, de là, les périodes autorisées, ont des durées respectives (e₁, e₂, e₃, e₄ ; (128), (64), (32), (16), (8), (4), (2), (1)) qui sont des multiples différents d'une unité ou de la plus petite durée, les multiples étant, par exemple, les puissances de deux, de telle manière que les émissions de lumière provenant des éléments d'enregistrement individuels dans des périodes autorisées différentes soient pondérées selon ces multiples.

4. Imprimante selon la revendication 3, caractérisée en ce que
les moyens (50 ; 220) pour garder les informations de correction gardent ces informations sous une forme indiquant quelles pondérations d'émission de lumière sont nécessaires pour la correction.

5. Imprimante selon la revendication 4, caractérisée en ce que
les moyens (210, 211, 220) pour garder les informations de gradation des couleurs gardent ces informations sous une forme indiquant quelles pondérations d'émission de lumière sont nécessaires pour la gradation des couleurs.

6. Imprimante selon l'une quelconque des revendications précédentes, caractérisée en ce que
les éléments d'enregistrement individuels (41a à 41n) de la pluralité sont des éléments de diodes électroluminescentes.
